(19) Europäisches Patentamt / European Patent Office / Office européen des brevets

(11) EP 2 626 397 B1

(12) # EUROPÄISCHE PATENTSCHRIFT

(45) Veröffentlichungstag und Bekanntmachung des Hinweises auf die Patenterteilung:
**30.05.2018 Patentblatt 2018/22**

(51) Int Cl.:
***C09J 133/00*** *(2006.01)* ***C07C 51/00*** *(2006.01)*

(21) Anmeldenummer: **13151216.2**

(22) Anmeldetag: **14.01.2013**

(54) **Haftklebemasse umfassend Polymere hergestellt mit biobasierten Monomeren**

Pressure senstive adhesive on the basis of polymers prepared with bio-based monomers.

Composition adhésive à base de polymères préparés avec des monomères bio

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2012 DE 102012201913**

(43) Veröffentlichungstag der Anmeldung:
**14.08.2013 Patentblatt 2013/33**

(73) Patentinhaber: **tesa SE**
**22848 Norderstedt (DE)**

(72) Erfinder:
- **Neubert, Ingo**
  **22850 Norderstedt (DE)**
- **Ellringmann, Dr. Kai**
  **22589 Hamburg (DE)**
- **Müssig, Dr. Bernhard**
  **21218 Seevetal (DE)**

(56) Entgegenhaltungen:
**EP-A1- 2 062 955** **WO-A2-2006/092272**
**WO-A2-2008/023040** **DE-A1- 19 627 679**
**DE-A1-102006 039 203** **DE-A1-102009 047 228**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 626 397 B1

## Beschreibung

Die Erfindung betrifft Haftklebemassen auf Polyacrylatbasis.

Die Ansprüche an die Qualität von Klebemassen, insbesondere auch in Hinblick auf eventuelle Verunreinigungen, sind in den letzten Jahren dramatisch angestiegen. Ein Beispiel sind Klebemassen, die zur unmittelbaren Verklebung am Körper geeignet sein sollen, oder solche, die zur Verklebung in Produkten, die in Körperkontakt kommen, dienen. Im Rahmen der zunehmenden Sensibilität des Endverbrauchers für gesundheitsschädliche Aspekte ist die Reinheitsanforderung an derartige Haftklebemassen erheblich gestiegen. Ein weiteres Beispiel ist die zunehmende Verwendung von Klebemassen für hochsensible elektronische Bauteile z.B. gedruckte organische Schaltungen. Auch dabei führen Verunreinigungen häufig zu unerwünschten Prozessen und führen zur Nichteignung bzw. einer Verkürzung der Lebensdauer durch Verwendung herkömmlicher Klebemassen für derartige Produkte.

Technisch wird versucht, Klebemassen oder deren Ausgangsstoffe aufzubereiten, um Verunreinigungen zu minimieren. Derartige Prozesse sind aber aufwändig und führen nicht immer zum gewünschten Erfolg.

Erfindungsgemäß wurde erkannt, dass sich die Verunreinigungen in Haftklebemassen durch die Verwendung biobasierter Monomere senken lassen.

Acrylathaftklebemassen sind beispielsweise in den Schriften EP 2 062 955 A beschrieben. Die dort offenbarten Haftklebemassen basieren jedoch nicht auf biobasierten Monomeren und weisen keinen erhöhten C14-Anteil auf.

Im Stand der Technik lassen sich zwar Klebemassen finden, die den Ersatz eines Teils der großtechnisch hergestellten Ausgangsstoffe durch biobasierte Edukte beschreiben. So werden beispielsweise Haftklebemassen angeboten, bei denen als Alkoholkomponente 2-Octyl(meth)acrylat eingesetzt wird, das auf nachwachsende Rohstoffe basiert (EP 2 076 577 A, WO 2009/129087 A). Diese Haftklebemassen sind aber auf die Erfüllung anderer technischer Aufgaben gerichtet, so wird insbesondere auf die viskositätssenkende Wirkung des dort verwendeten Monomers hingewiesen. Es gibt im genannten Stand der Technik keinerlei Erkenntnis oder Lehre, dass die dort beschriebenen Klebemassen den in der vorliegenden Schrift vorstehend dargestellten Reinheitsansprüchen besser genügen würden als die vorbekannten. Eine solche Erkenntnis ließe sich somit nur durch rückschauende Betrachtung gewinnen, so dass die genannten Schriften der erfinderischen Tätigkeit bezüglich der hier dargestellten technischen Lehre nicht entgegenstehen.

Verfahren zur Herstellung von Polyacrylaten unter Einsatz von auf nachwachsenden Rohstoffen basierenden Monomeren zeigen auch die Schriften WO 2008/023040 A, WO 2006/092272 A und DE 10 2006 039 203 A. In diesen Schriften findet sich jedoch kein Bezug zu deren Verwendung in Haftklebemassen mit geringem Anteil gesundheitsschädlicher Verunreinigungen oder zu der Verwendung derartiger Haftklebemassen.

Kritisch ist in den vorgenannten Schriften des Standes der Technik zudem die Acrylsäurekomponente der Acrylmonomere. Die dort eingesetzte (Meth-)Acrylsäure ist nach wie vor petrochemisch hergestellt. Großindustriell wird Acrylsäure durch zweistufige Oxidation hergestellt, in der ersten Stufe wird Propen mit Luft an Bismuth-Molybdänoxid-Katalysatoren zu Propenal umgesetzt; in der zweiten Stufe wird dieses Propenal an Molybdän-Vanadiumoxid-Katalysatoren zu Acrylsäure weiteroxidiert. Zudem führen die dabei angewandten hohen Reaktionstemperaturen zu Nebenprodukten. Dies hat zur Folge, dass großtechnisch hergestellte Acrylsäure meist mit Katalysatorresten und den Nebenprodukten des Herstellprozesses verunreinigt ist. Auch wenn der Anteil solcher Verunreinigungen für viele Anwendungen der schließlich aus solcher Acrylsäure hergestellten Produkte vernachlässigt werden kann, gilt dies insbesondere für viele der obengenannten Anwendungen am menschlichen Körper oder im Kontakt mit dem menschlichen Körper nicht. Ähnliches gilt für die Verwendung der Produkte in hochempfindlichen elektronischen Geräten bzw. in direktem Kontakt zu hochempfindlichen elektronischen Bauteilen.

Ein Verfahren, mit dem sich biobasierte Acrylsäure herstellen lässt, zeigt die WO 2006/092272. Die Acrylsäure wird dort zur Herstellung wasserabsorbierender Polymere genutzt, insbesondere Absorbermaterialien. Die grundsätzliche Verwendbarkeit für Klebmassen ist im Prinzip erwähnt, jedoch wird hierauf nicht weiter eingegangen, und es sind insbesondere keine Haftklebemasse erwähnt. Die Problematik verunreinigungsfreier Haftklebemassen, die für spezielle Anwendungen geeignet sind, findet sich nicht.

Ein weiteres Verfahren zur Herstellung biobasierter Acrylsäure verläuft über einen Fermentationsprozess. Ein Beispiel für einen solchen Prozess zeigt die DE 10 2006 039 203 A. Die Verwendung für Klebemassen wird nicht vorgeschlagen.

Es besteht daher der Bedarf an Klebemassen, insbesondere Haftklebemassen, auf Acrylatbasis, bei denen der Anteil an Verunreinigungen weiter gesenkt werden kann. Wie bereits oben angedeutet, wurde erfindungsgemäß gefunden, dass die Verwendung biobasierter Acrylsäure und/oder biobasierter Methacrylsäure für die Herstellung derartiger Haftklebemasse den Anteil gesundheitsschädlicher Verunreinigungen senken kann.

Gegenstand der Erfindung ist daher eine Klebemasse, insbesondere eine Haftklebemasse, umfassend eine Polymerkomponente auf Acrylatbasis, bei der mindestens 50 Gew.-%, bevorzugt mindestens 70 Gew.-%, sehr bevorzugt mindestens 90 Gew.-%, sehr bevorzugt zu mehr als 98 Gew.-%, äußerst bevorzugt ausschließlich (also zu 100 %) der zur Herstellung der Polymerkomponente eingesetzten Monomere vollständig auf nachwachsende Rohstoffe (im Rahmen

dieser Schrift auch als biobasierte Rohstoffe bezeichnet) basieren. In äußerst günstiger Weise setzt man mehr als 99,5 Gew.-% solcher biobasierter Rohstoffe ein. Idealerweise beruht die Polymerkomponente der (Haft-)Klebemasse vollständig (also zu 100 %) auf biobasierte Rohstoffe.
Die Bezeichnung "(Haft-)Klebemasse" ist im Rahmen dieser Schrift zu lesen als "Klebemasse, besonders bevorzugt in der Ausführungsform als Haftklebemasse".

Die Erfindung betrifft somit (Haft-)Klebemassen, deren Polymerkomponente eine solche auf Acrylatbasis ist, also aus einem oder mehreren solchen Polymeren besteht, die zum Teil, insbesondere zu mehr als 40 Gew.-%, bevorzugt zum überwiegenden Teil (also zu mehr als 50 Gew.-%), auf Acrylsäure, Methacrylsäure, Acrylsäureestern und/oder Methacrylsäureestern als Monomeren (im folgenden gemeinschaftlich als "Acrylmonomere" bezeichnet) zurückzuführen sind.

Insbesondere ist zumindest ein Teil der Acrylmonomere, bevorzugt sind alle eingesetzten Acrylmonomere solche, die vollständig auf nachwachsende Rohstoffe zurückzuführen sind, also biobasiert sind.

Als "vollständig auf nachwachsende Rohstoffe zurückzuführende", auch als "vollständig biobasierende" Monomere werden solche Monomere bezeichnet, die keine Bestandteile aufweisen, die auf petrochemische Rohstoffe zurückzuführen sind. Solche Monomere können entweder direkt aus tierischen oder pflanzlichen Quellen entnommen werden, oder ihre Bestandteile werden ausschließlich aus nachwachsenden Rohstoffen erzeugt. Als Beispiel bedeutet dies für Ester, dass sowohl die Säurekomponente als auch die Alkoholkomponente aus nachwachsenden Rohstoffen erzeugt wurde. Nicht biobasierte Monomere sind solche, die aus Edukten ausschließlich aus petrochemischer Herstellung basieren.
Für Acrylmonomere, die vollständig auf nachwachsenden Rohstoffen basieren, muss sowohl die Alkoholkomponente als auch die Säurekomponente (Methacrylsäure beziehungsweise Acrylsäure) biobasiert sein, also nicht aus petrochemischer Produktion stammen. Als teilweise biobasiert werden im Rahmen dieser Schrift solche Monomere bezeichnet, bei denen entweder nur die Alkoholkomponente oder nur die Säurekomponente auf nachwachsende Rohstoffe zurückzuführen ist.

Sofern die Polymerkomponente nicht ausschließlich (also nicht zu 100 %) auf biobasierte Monomere zurückzuführen ist, kann

A) die Polymerkomponente entweder aus einem einzigen Polymer gebildet werden, zu dessen Herstellung neben vollständig biobasierten Monomeren auch solche Comonomere eingesetzt wurden, die nicht biobasiert sind, und/oder solche Monomere, die nur teilweise biobasiert sind,
B) die Polymerkomponente aus zwei oder mehr Polymeren geblendet sein, wobei

B1) ein oder mehr Polymere derart ist, dass zu deren Herstellung als Monomere neben vollständig biobasierten Monomeren auch solche Comonomere eingesetzt wurden, die nicht biobasiert sind, und/oder solche Monomere, die nur teilweise biobasiert sind,
B2) oder dass ein oder mehr Polymere derart ist, dass zu deren Herstellung solche Comonomere eingesetzt wurden, die nur teilweise biobasiert sind, und gegebenenfalls zusätzlich solche Monomere, die nicht biobasiert sind,
wobei sowohl im Falle von B1) als auch im Falle von B2) gegebenenfalls in der Polymerkomponente zusätzlich auch ein oder mehrere Polymere vorhanden sein können, die ausschließlich auf vollständig biobasierende Monomere zurückzuführen sind.

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können.
Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann. Die Zusammensetzung der Polymerkomponente kann je nach gewünschten Eigenschaften der Haftklebemasse gewählt werden. Üblicherweise werden der Polymerkomponente weitere Zusätze -Cokomponenten und/oder Additive - zum Teil in erheblichem Umfang zugesetzt, um die gewünschten Eigenschaften des Endproduktes (der Haftklebemasse) zu erhalten. (die Bezeichnungen "Cokomponenten" und "Additive" werden hier nicht zur strengen Trennung verwendet, sondern gehen fließend ineinander über; als "Cokomponenten" werden eher Zusätze verstanden, die in

erheblichen Mengen eingesetzt werden, während Additive üblicherweise in kleineren Mengen eingesetzt werden, um bestimmte Eigenschaften zu erzielen. Die Unterscheidung soll jedoch im Rahmen dieser Schrift für keinen der beiden Begriffe einschränkend verstanden werden). Häufig werden Haftklebemassen vernetzt, um eine hinreichende Kohäsion zu bewirken.

Die erfindungsgemäßen (Haft-)Klebemassen bieten eine Reihe zusätzlicher Vorteile über die gute Verträglichkeit hinaus. Die Erdölreserven sind endlich, so dass sparsam mit ihnen umgegangen werden muss. Die vollständige Verwendung nachwachsender Rohstoffe - oder zumindest zu einem großen Anteil - greift in den Erdölhaushalt nicht - oder nur sehr begrenzt - ein. Bei der Verarbeitung petrochemischer Produkte wird der $CO_2$-Haushalt der Erde beeinflusst, was zum Beispiel zum Phänomen der Klimaerwärmung beiträgt. Auch dieses Problem kann bei Verwendung biobasierender Rohstoffe vermieden werden. Insgesamt ist daher ein Bedarf an Produkten mit besserer Ökobilanz vorhanden, der durch die erfindungsgemäß vorgestellten (Haft-)Klebemassen befriedigt wird.

Weiter vorteilhaft an den erfindungsgemäßen Haftklebemassen ist, dass sie es aufgrund ihrer chemischen Natur erlauben, dass ihre Herkunft einwandfrei nachgewiesen werden kann (so genannter Originalitätsnachweis). Dies ist insbesondere für Produkte, wie sie oben im dermatologischen und medizinischen Anforderungsprofil dargestellt sind, von großem Vorteil, denn Produktfälschungen, die auch im Klebeproduktsektor stark zunehmen, können hier unter anderem sogar zu gesundheitsschädlichen Effekten, wie zum Beispiel Reizungen, Allergien oder dergleichen führen. Der Imageschaden für den Anbieter der Originalprodukte wäre immens. Daher ist dieser daran interessiert, zweifelsfrei nachweisen zu können, ob die unter seinem Namen angebotenen Produkte tatsächlich aus seinem Hause stammen oder nicht. Auch ein Nachweis einer eventuellen Patentverletzung durch Wettbewerbsprodukte ist durch eine zweifelsfreie Analyse möglich. Im Gegensatz zu Produkten auf petrochemischer Basis weisen solche, die zu einem erheblichen Anteil, bevorzugt vollständig, auf nachwachsende Rohstoffe zurückzuführen sind, einen natürlichen Anteil an radioaktiven Kohlenstoffatomen ($^{14}C$-Isotope) auf. Der Anteil dieser Isotope kann bestimmt werden und gibt einen Rückschluss auf die Menge des eingesetzten natürlichen Rohstoffs. Der Anteil an nachwachsenden Rohstoffen wird dabei mittels der $^{14}C$-Radiocarbonmethode nach ASTM D6866-04 bestimmt. Die Methode beruht auf der Messung des Isotops $^{14}C$, das in der Natur (also in Biomassen) mit einer Häufigkeit von $10^{-10}$ % im Kohlenstoff vorkommt. Die Halbwertszeit von 5730 Jahren ist einerseits lang genug, als dass in den Verwendungszeiträumen üblicher Klebeprodukte, wie beispielweise Haftklebebändern, keine signifikante Änderung des $^{14}C$-Gehaltes durch Zerfall stattfindet (aber doch kurz genug, dass historische Gegenstände, die aus biologischer Materie hergestellt wurden, datiert werden können). Die Messung des Isotops $^{14}C$ erfolgt mittels Flüssigszintillationsspektrometrie oder Massenspektrometrie. Aufgrund der o.g. Halbwertszeit sind in Kohlenstoffproben, die älter als 60.000 Jahre sind, im Rahmen der Nachweisgrenze keine $^{14}C$-Isotope mehr detektierbar. Der Kohlenstoff in Erdöl-basierenden Rohstoffen der Petrochemie, der mehrere Millionen Jahre alt ist, enthält daher keine $^{14}C$-Isotope mehr. Gleiches gilt für Erdgas- und Kohle-basierte Rohstoffe.

Die Polymerkomponente der erfindungsgemäßen (Haft-)Klebemasse umfasst vorteilhaft ein oder mehrere Polyacrylate, jeweils erhältlich durch (Co-)Polymerisation von

(a1) 70 bis 100 Gew.-% Acrylsäureester und/oder Methacrylsäureester und/oder deren freien Säuren mit der Formel

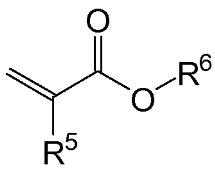

(VI)

,

wobei $R^5$ = H und/oder $CH_3$ darstellt und $R^6$ = H und/oder Alkylketten mit 1 bis 30 C-Atomen darstellt, mit
(a2) 0 bis 30 Gew.-% olefinisch ungesättigte Monomere mit funktionellen Gruppen. Die Gewichtsangaben beziehen sich auf das jeweilige Polyacrylat. Erfindungsgemäß bevorzugt ist ein Teil, besonders bevorzugt sind alle Acrylmonomere biobasiert.

Dieses Polyacrylat kann bzw. diese Polyacrylate können die Basispolymerkomponente der Haftklebemasse darstellen, aber auch mit weiteren Polymeren (Acrylatpolymeren oder anderen Polymeren) zur Basispolymerkomponente abgemischt sein.

Die Polymerkomponente wird insbesondere vorteilhaft derart gewählt, dass der GesamtGehalt an Acrylatmonomeren 40 bis 100 Gew,-%, besonders bevorzugt 50 bis 100 Gew.-% beträgt.

Ein Verfahren zur Herstellung von biobasierter Acrylsäure, die erfindungsgemäß vorteilhaft als Säurekomponente für biobasierte Monomere eingesetzt werden kann, geht von Glycerin aus, das beispielsweise in großen Mengen bei der Umesterung von Pflanzenölen mit Methanol zur Herstellung von Biodiesel anfällt und daher zur Verfügung steht. Das Verfahren umfasst eine Dehydratisierung des Glycerins zu Acrolein (Glycerin reagiert schon bei Temperaturen ab

200 °C unter Wasserabspaltung zu Acrolein). Nachfolgend erfolgt - in einem ein- oder zweistufigen Prozess - eine Oxidation des Acroleins zur Acrylsäure. Ein Beispiel für ein derartiges Verfahren, das auch erfindungsgemäß gut angewandt werden kann, zeigt die US 2007/0129570. Dort finden sowohl die Dehydratisierung des Glycerins zu Acrolein als auch die Oxidation des Acroleins zur Acrylsäure in der Gasphase statt. Die Dehydratisierung des Glycerins in der genannten Schrift findet katalytisch - beispielweise an natürlichen oder synthetischen Tonerdekatalysatoren - statt, und zwar bevorzugt bei Temperaturen zwischen 200 bis 370 °C, beispielsweise in einem mit dem Katalysator gefüllten Durchstromreaktor und gegebenenfalls verdünnt mit einem Inertgas. Die Oxidation findet vorteilhaft ebenfalls an Katalysatoren, wie beispielweise Metalloxiden, statt; zum Beispiel bei Temperaturen im Bereich von 200 bis 400 °C. Auch hier kann das gasförmige Dehydratisierungsprodukt durch einen mit dem entsprechenden Katalysator gefüllten Durchstromreaktor geleitet werden. Zur Erhöhung der Ausbeute kann ein sauerstoffhaltiges Gas beigemischt sein. Auf die besonderen in der Schrift dargestellten Verfahrensmöglichkeiten wird vorliegend explizit Bezug genommen.
Die vorstehend bereits erwähnte WO 2006/092272 offenbart ein ähnliches Verfahren, bei dem zunächst Glycerin zu einem Acrolein aufweisenden Dehydratisierungsprodukt umgewandelt wird und dann eine Gasphasenoxidation dieses Dehydratisierungsproduktes vorgenommen wird, wobei ein Acrylsäurehaltiges Produkt erhalten wird. Durch Kontakt des Oxidationsproduktes mit einem Quenchmittel und Aufbereitung der Quenchphase erhält man Acrylsäure. Dieses Verfahren ermöglicht die Herstellung von Acrylsäure aus nachwachsenden Rohstoffen ohne den Einsatz reaktiver Verbindungen und ist daher für die vorliegende Erfindung besonders geeignet. Das Glycerin erhält man sehr bevorzugt aus der Verseifung von tierischen oder pflanzlichen Fetten.
Die Hydrierung kann - zumindest teilweise - in der flüssigen Phase, bevorzugt, in wässrigen Systemen, und/oder in der Gasphase durchgeführt werden. Bei Temperaturen unterhalb der Siedetemperatur des Glycerins (290 °C) erhält man so gut wie keine Crackprodukte.

Erfindungsgemäß einsetzbare biobasierte Acrylsäure lässt sich auch durch ein Verfahren erhalten, bei dem Milchsäure (2-Hydroxypropionsäure) oder 3-Hydroxypropionsäure aus biologischem Material als Fluid - insbesondere in wässriger Phase - erzeugt wird, die Hydroxypropionsäure unter Erhalt eines Acrylsäure beinhaltenden Fluids - insbesondere einer wässriger Phase - dehydratisiert wird, und das die Acrylsäure beinhaltende Fluid aufgereinigt wird.
Sehr vorteilhaft geht man vor, indem die Hydroxypropionsäure durch Fermentation hergestellt wird. Fermentative Umsetzungen verlaufen häufig hochselektiv, mit hohen Ausbeuten und nahezu nebenproduktfrei aufgrund der hohen Selektivität der entsprechenden Mikroorganismen. Nebenreaktionen werden auch weitgehend dadurch vermieden, dass die Fermentationsprozesse bei geringen Temperaturen von 30 - 60 °C durchgeführt werden. Großtechnische chemische Prozesse der Petrochemie werden dagegen oftmals zur Optimierung der Ausbeuten bei sehr viel höheren Temperaturen von meist > 200 °C durchgeführt. Hohe Reaktionstemperaturen führen aber immer zu Nebenreaktionen und zur Bildung von Crackprodukten.
Ein solches Verfahren zeigt beispielweise die DE 10 2006 039 203 A1, bei dem die Aufreinigung des Acvrylsäure beinhaltenden Fluids durch eine Suspensionskristallisation oder eine Schichtkristallisation durchgeführt wird.
Die Hydroxypropionsäure wird besonders bevorzugt durch fermentative Herstellung in wässriger Phase aus einem biologischem Material, wie Kohlenhydraten, zum Beispiel Glycose, und/oder aus Glycerin erhalten, wobei zur Fermentation Mikroorganismen eingesetzt werden, zum Beispiel Bakterien-, Pilz- oder Hefezellen. Die Mikororganismen werden danach ggf. abgetötet und die erhaltene wässrige Phase kurzfristig (mindestens 60 Sekunden, bevorzugt länger) auf über 100 °C erhitzt, wonach verbliebene Feststoffe (zum Beispiel Reste des biologischen Materials, Mikroorganismen und dergleichen) durch Sedimentation, Zentrifugation oder Filtration abgetrennt werden können. Nachfolgend kann der Dehydratationsschritt erfolgen.

Alkohole auf Basis nachwachsender Rohstoffe lassen sich durch unterschiedliche Verfahren produzieren. So ist Biobutanol durch Fermentation von pflanzlicher, meist zuvor aufbereiteter Biomasse erhältlich, ausgehend beispielweise von Zucker, wie beispielweise Saccharose oder Stärke, oder ausgehend von Cellulose zur Erzeugung von iso-Butanol oder ebenfalls von n-Butanol. Die Cellulose wird in dem zweiten Fall enzymatisch in Zucker aufgespalten. Auch iso-Butanol kann aus Stärke oder aus Zucker hergestellt werden. Hierzu werden gentechnisch modifizierte Mikroorganismen eingesetzt (so genannte "Weiße Biotechnologie"). Im so genannten A.B.E.-Prozess (A.B.E. für Aceton, Butanol, Ethanol) setzt man zur Fermentation für die Produktion von 1-Butanol das Bakterium Clostridium acetobutylicum ein.
2-Octanol lässt sich als Nebenprodukt bei der Oxidation von Rizinussäure zur Sebacinsäure gewinnen und isolieren. N-Heptanol lässt sich aus Heptanal gewinnen, das bei der thermischen Spaltung von Rizinussäure (pyrolytische Zersetzung zu Heptanal und Undecensäure) anfällt. Tetrahydrofurfurylalkohol lässt sich durch Hydrierung von Furfural gewinnen, das seinerseits bei der Dehydratisierung von C5-Zuckern bei der Zellstoffgewinnung entsteht. Durch Reduktion von Campfer, welches durch Extraktion von Pflanzenteilen des Campferbaumes erhalten wird, entsteht Isoborneol. C8- bis C16-Fettsäurealkohole werden durch Veresterung von Pflanzenölen und anschließender Hydrierung gewonnen. Ebenfalls können epoxidierte Fettsäureester, vorzugsweise epoxidierte Fettsäuremethylester verwendet werden.
Gegenstand der Erfindung sind daher weiterhin (Haft-)Klebemassen, bei denen die Polymerkomponente mindestens zu 50 Gew.-%, besser mindestens zu 70 Gew.-%, bevorzugt mindestens zu 90 Gew.-%, sehr bevorzugt zu mehr als 98 Gew.-%, äußerst bevorzugt ausschließlich (also zu 100 %), auf Homo- oder Copolymere von jeweils vollständig biobasiertem n-Butylacrylat und/oder iso-Butylacrylat und/oder 2-Octylacrylat und/oder Heptylacrylat und/oder Tetrahydrofurfurylacrylat und/oder Fettsäureacrylaten auf Basis der Fettsäurealkohole oder epoxidierten Fettsäureestern zurückzuführen ist. Neben den vorgenannten Monomeren können weitere Comonomere, die vollständig auf nachwachsende Rohstoffe basieren, wie zum Beispiel Isobornylacrylat, Itaconsäure und/oder Itaconsäuredibutylester oder teilweise auf nachwachsenden Rohstoffen basieren wie zum Beispiel Methacrylatester der vorgenannten biobasierten Alkoholen, eingesetzt werden, und/oder die Polymerkomponente kann solche weiteren Polymere umfassen, wie sie weiter oben unter A) und B) bereits dargestellt wurden.
Die Veresterung von Alkohol und Acrylsäure bzw. Methacrylsäure findet nach bekannten Verfahren statt, wobei die gewünschten Monomere auf Basis nachwachsender Rohstoffe erzeugt werden. Eine solche Veresterung kann zum Beispiel durch azeotrope Destillation beispielsweise mit Toluol als Lösungsmittel, durch enzymatisch katalysierte Fermentation (als Enzyme lassen sich hierbei beispielweise Lipasen einsetzen) oder durch Reaktion der in die Chloride überführte Säure mit dem Alkohol durchgeführt werden.
Eine weitere Möglichkeit zur Herstellung von Bio-n-Butylacrylat kann gemäß eines in der ES 8400383 A dargestellten Verfahrens realisiert werden. Demnach lässt sich D/L-Milchsäure (zum Beispiel erhältlich von Aldrich natural Lactic Acid) mit Bio-n-Butanol (hergestellt durch Fermentation von Zucker, Cathay Industrial Biotech) unter Zusatz von p-Toluolsulfonsäure mittels azeotroper Destillation mit Toluol als Lösemittel verestern. Die Reinigung erfolgt durch Destillation. Der entstandene Milchsäurebutylester kann anschließend in einem Gasphasenreaktor bei 250 °C (Katalysator Calciumphosphat) dehydratisiert werden. Die Reaktionsgase werden in einer Kühlfalle aufgefangen und durch Vakuumdestillation unter Zugabe von Hydrochinon-Monemethylether gereinigt. Es lässt sich n-Butylacrylat in hoher Reinheit erhalten.

Vorzugsweise werden für die Monomere (a1) Acryl- und/oder Methacrylsäureester mit Alkylgruppen mit 1 bis 14 C-Atomen eingesetzt. Diese Acrylmonomere können beispielweise und vorteilhaft gewählt werden aus der folgenden Liste, umfassend Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Laurylmethacrylat, Stearylacrylat, Stearylmethacrylat, Behenylacrylat, und deren verzweigten Isomere, wie z. B. 2-Ethylhexylacrylat, iso-Butylacrylat, iso-Butylmethacrylat, 2-Octylacrylat, iso-Octylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Beispielweise und vorzugsweise werden für (a2) Monomere der folgenden Liste verwendet, umfassend Acrylsäure, Methacrylsäure, Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethyl-methacrylat, Diethylaminoethylacrylat und Tetrahydrofurfurylacrylat, Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N*-*tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dirnethylacrylsäure, 4-Vinylbenzoesäure, wobei diese Aufzählung nicht abschließend ist.

Ebenso bevorzugt werden für die Komponente (a2) aromatische Vinylverbindungen eingesetzt, wobei die aromatischen Kerne bevorzugt auf C4- bis C18-Bausteinen basieren, aber auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Zur Polymerisation werden die Monomere dermaßen gewählt, dass die resultierenden Polymere als thermisch vernetzbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Die Art der Comonomere wird bevorzugt so gewählt, dass die Glasübergangstemperatur $T_{G,A}$ der Polymere (als Glasübergangstemperaturen werden im Rahmen dieser Schrift die über Dynamische Differenzkalorimetrie (DSC) nach DIN 53765 bestimmbaren statischen Glasübergangstemperaturen verstanden; die Angaben zur Glasübergangstemperatur $T_G$ im Rahmen dieser Schrift beziehen sich auf den Glasumwandlungstemperatur-Wert Tg nach DIN 53765:1994-03, sofern im Einzelfall nichts anderes angegeben ist) unterhalb der Anwendungstemperatur, bevorzugt bei etwa 20 °C unterhalb der Anwendungstemperatur, üblicherweise aber bei $T_{G,A}$ nicht höher als 15 °C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Polymerisation der vorgenannten Monomere zur Herstellung des Polyacrylates für die Polymerkomponente wird vorteilhaft über ein radikalisches oder über ein radikalischkontrolliertes Polymerisationsverfahren ausgeführt. Außerdem können auch Kombinationen verschiedener Polymerisationsverfahren eingesetzt werden. Neben der konventionellen freien radikalischen Polymerisation seien nur beispielhaft die ATRP, die Nitroxid/TEMPO- kontrollierte Polymerisation oder der RAFT-Prozess als vorteilhafte Prozesse genannt, also insbesondere solche Verfahren, die eine Kontrolle der Kettenlängen oder der Polymerarchitektur erlauben.
Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind beispielweise reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) oder Gemische davon. Die wässrigen Reaktionssysteme für wässrige Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Colösungsmittel werden bevorzugt gewählt aus der folgenden Gruppe, bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisation wird vorteilhaft durch einen oder mehrere radikalische Initiatoren initiiert. Als radikalische Initiatoren zur Polymerisation eignen sich insbesondere thermisch zerfallende Initiatoren, besonders radikalbildende Azo- oder Peroxo-Initiatoren. Der bzw. die Inititiatoren werden bevorzugt vor und/oder im Verlauf der Polymerisation zugesetzt. Bevorzugt ist eine mehrfache Initiierung, bei welcher eine erste InitiatorZugabe vor oder zu Beginn der Polymerisation erfolgt und bei der im Verlaufe der Polymerisation zumindest eine weitere Inititatorzugabe erfolgt; wobei vorteilhaft die Zugabe weiterer Initiatoren in mindestens zwei Verfahrensstufen erfolgt. Dabei kann in jedem Zugabeschritt der zuerst eingesetzte Initiator, ein bereits zuvor eingesetzter Initiator oder ein anderer Initiator eingesetzt werden. Prinzipiell eignen sich alle für Acrylate bekannten üblichen Initiatoren. Besonders bevorzugt kann die Initiatorzugabe auch kontinuierlich oder halbkontinuierlich durchgeführt werden.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azo-bis-(isobutyronitril), Cyclohexylsulfonylacetylperoxid, Diisopropylpercarbonat, Bis(4-*tert*-butylcyclohexyl)peroxydicarbonat (Perkadox® 16 der Fa. Akzo Nobel), *tert*-Butylperoktoat, Benzpinacol. In einer sehr bevorzugten Auslegung werden als radikalische Initiatoren 2,2'-Azo-bis-(2-methylbutyronitril) (Vazo 67® der Fa. DuPont) und/oder 1,1'-Azo-bis-(cyclohexancarbonsäurenitril) (Vazo 88® der Fa. DuPont) verwendet.
Zusätzlich oder alternativ können Radikalquellen verwendet werden, die erst unter Bestrahlung mit UV-Licht Radikale freisetzen.

Zur Initiierung der Polymerisation ist für die thermisch zerfallenden Initiatoren der Eintrag von Wärme essentiell. Die Polymerisation kann für die thermisch zerfallenden Initiatoren insbesondere durch Erwärmen auf 50 bis 160 °C, je nach Initiatortyp, initiiert werden. Für den Einsatz von UV-Initiatoren wird mit UV-Licht der geeigneten Wellenlänge eingestrahlt.
Die Polymerisation kann insbesondere in einem Temperaturbereich von 0 °C bis 150 °C durchgeführt werden. Die Polymerisationszeit beträgt üblicherweise -je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Die im Lösemittelverfahren hergestellten Polyacrylate weisen bevorzugt ein gewichtsmittleres Molekulargewicht $M_w$ > 500.000 g/mol und vorteilhafterweise > 800.000 g/mol auf (die Angabe mittlerer Molekulargewichte $M_w$ und $M_n$ und von Polydispersitäten P bezieht sich auf die Bestimmung mittels Größenausschlusschromatographie [Gelpermeationschromatographie, GPC]; Bezug: PMMA-Standards (Polymethylmethacrylat-Standards) [Kalibrierung mittels Polystyrol-Standards und Umrechnung mittels Mark-Houwink-Beziehung]). Die erfindungsgemäßen Acrylathaftklebemassen

besitzen, je nach Reaktionsführung im Lösemittelverfahren, bevorzugt eine Polydispersität D = $M_w/M_n$ von D im Bereich von 10 bis 25 und mehr bevorzugt zwischen 15 und 20. Die im Dispersionsverfahren hergestellten Polyacrylate neigen nach dem Trocknen sehr stark zur Vergelung. Daher ist eine exakte Bestimmung der Molekulargewichte sowie der Polydispersität schwierig, und auf eine entsprechende Angabe wird hier verzichtet.

Bekannt ist ebenfalls die Herstellung und Verwendung von Polymerdispersionen aus Acrylatmonomeren zur Herstellung von Haftklebstoffen wie zum Beispiel in EP 1 230 275 A und EP 1 323 740 A beschrieben. Entsprechendes Verfahren lassen sich hervorragend einsetzen für die Herstellung der erfindungsgemäßen Haftklebmassen basierend auf nachwachsenden Acrylatmonomeren.

Sofern die Basispolymerkomponente weitere Polymere umfasst, werden diese bevorzugt mit den hergestellten Polyacrylaten compoundiert.

Die Basispolymerkomponente lässt sich vorteilhaft zur Erzeugung eines Folgeproduktes, wie beispielsweise einer (Haft-)Klebemasse, additivieren (Zusatz von Cokomponenten und/oder Additiven), wobei die Additivierung an verschiedenen Stellen im Prozessablauf erfolgen kann, etwa vorteilhaft nach erfolgter Polymerisation (vor oder nach einer eventuellen Aufkonzentration - etwa in der Polymerschmelze -) oder vor oder während der Weiterverarbeitung (beispielsweise der Beschichtung einer (Haft-)Klebemasse).

Bei geeigneter Wahl der Monomere kann die (Haft-)Klebemasse harzfrei und/oder frei von anderen Additiven eingesetzt werden. Insbesondere für die Verwendung als Haftklebemassen ist es aber vorteilhaft, der Basispolymerkomponente (bzw. der schon teilabgemischten Haftklebemasse) übliche, zur Erzielung und/oder Verbesserung der haftklebrigen Eigenschaften zweckdienliche Zusätze oder zur Erzielung und/oder Verbesserung anderer Eigenschaften zweckdienliche Additive zugemischt werden, zum Beispiel Cokomponenten wie Harze und oder funktionelle Additive.

So können vorteilhaft Harze beigemischt werden, insbesondere klebrigmachende Harze. Klebrigmachende Harze können zum Beispiel zur Erhöhung der Klebrigkeit, Verbesserung der Benetzungseigenschaften von Substraten, des Aufließverhaltens, der Verbesserung der Viskosität der Schmelze bei der Verarbeitung und/oder der Adhäsionssteigerung dienen.

Als klebrigmachende Harze sind beispielsweise die bekannten und in der Literatur beschriebenen Klebharze einsetzbar. Im allgemeinen lassen sich alle mit der entsprechenden Klebemasse kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Beispielhaft genannt seien die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Kombinationen dieser und weiterer Harze können gezielt eingesetzt werden, um die Eigenschaften der resultierenden Klebemasse wunschgemäß einzustellen.

In bevorzugter Vorgehensweise werden solche Harze, insbesondere aus der vorstehenden Liste, zugesetzt, die zu mindestens 50 Gew.-%, insbesondere die zu mehr als 95 Gew.-%, besonders bevorzugt die ausschließlich (also zu 100 %) auf nachwachsenden Rohstoffen basieren wie zum Beispiel Pentaerithrit- oder Glycerinester vom Kolophonium, Terpenharze oder teilweise biobasierte Terpenphenolharze.

Weitere Cokomponenten und Additive, die der Polymerkomponenten - insbesondere zur Eignung der Verwendung als (Haft-)Klebemasse - vorteilhaft und optional zugesetzt werden können, umfassen Weichmacher (Plastifizierungsmittel), Füllstoffe und Streckmittel (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel, Stabilisatoren und/oder Alterungsschutzmittel, z.B. in Form von primären und sekundären Antioxidantien oder in Form von Lichtschutzmitteln. Auch hier werden bevorzugt biobasierende Verbindungen gewählt.

In besonders bevorzugter Vorgehensweise wird die erfindungsgemäßen (Haft-)Klebemasse für ein Klebeband bzw. ein Haftklebeband verwendet. Analog dem eben bereits gesagten wird im Folgenden die Bezeichnung "(Haft-)Klebeband" als Kurzform verwendet an Stelle des Ausdrucks "Klebeband, besonders bevorzugt in der Ausführungsform als Haftklebeband".

(Haft-)Klebebänder können ein- oder mehrschichtig sein. Mehrschichtige Klebebänder können einen Träger aufweisen oder trägerlos sein.

Eine vorteilhafte Ausführung der Erfindung ist die Verwendung einschichtiger selbstklebender (Haft-)Klebebänder, also einer trägerfreien Schicht der erfindungsgemäßen (Haft-)Klebemasse. Einschichtige (Haft-)Klebebänder werden auch als Transferklebebänder bezeichnet. Als trägerfrei wird eine Klebemasse bezeichnet, die keinen dauerhaften (bei der Anwendung im Klebeband verbleibenden) Träger aufweist. Vielmehr ist die selbstklebende Masse in bevorzugter Ausgestaltung lediglich auf einen temporären Träger aufgebracht, also auf ein Material, das lediglich vorübergehend zur Stützung, zum Schutz der Klebeoberfläche, zur leichteren Handhabbarkeit und zur leichteren Auftragbarkeit der selbstklebenden Masse dient. Solche temporären Träger werden auch als Liner bezeichnet und können vorteilhaft eine Releasewirkung aufweisen, etwa durch geeignete Oberflächenbeschichtungen. Auch die zweite Seite des Transferklebebandes kann optional mit einem Liner versehen sein.

Als Trennmaterialien, auch als Liner oder Releaseliner bezeichnet, sind insbesondere ein- oder bevorzugt beidseitig antiadhäsiv ausgerüstete (beschichtete oder behandelte) Liner-Trägermaterialien. Als Trägermaterial für den Releaseliner kommen zum Beispiel diverse Papiere, optional auch in Kombination mit einer stabilisierenden Extrusionsbeschichung, als Trägermaterial für Releasematerialien in Frage. Weitere geeignete Liner-Trägermaterialien sind Folien, beispielweise Polyolefin-Folien, zum Beispiel auf Basis von Ethylen, Propylen, Butylen und/oder Hexylen.
Als antiadhäsive Trennbeschichtung werden häufig - insbesondere vernetzbare - Silikonsysteme eingesetzt. Zu den üblicherweise eingesetzten Linern gehören zum Beispiel silikonisierte Papiere und silikonisierte Folien.
Für die Verwendung der (Haft-)Klebemassenschicht zur Verklebung auf einer Substratoberfläche wird der Liner bzw. werden die Liner dann entfernt, so dass die beiden klebenden Seiten jeweils direkten Kontakten zu jeweils einer der miteinander zu verklebenden Substratoberflächen erhalten. Der Liner stellt somit kein produktives Bauteil dar.
Die Herstellung eines Transferklebebandes kann aus Lösung, aus der Schmelze sowie aus Dispersion erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebemasseschicht.
Das Transferklebeband kann in unterschiedlichen Schichtdicken hergestellt werden, insbesondere auch mit einer Schichtdicke von mindestens 10 $\mu$m, vorzugsweise von mindestens 50 $\mu$m, weiter vorzugsweise von mindestens 100 $\mu$m.

Die erfindungsgemäße Haftklebemasse ist auch zur Herstellung mehrschichtiger (Haft-)Klebebänder hervorragend geeignet. Mehrschichtige (Haft-)Klebebänder umfassen üblicherweise zumindest eine Trägerschicht und können ein- oder beidseitig eine außenliegende Schicht einer erfindungsgemäßen (Haft-)Klebemasse aufweisen. Bei beidseitig klebend ausgerüsteten (Haft-)Klebebändern können entweder eine der außenliegenden Schichten oder auch beide außenliegenden Schichten erfindungsgemäße (Haft-)Klebemassen sein. Im letzteren Fall können die (Haft-)Klebemassenschichten bezüglich ihrer chemischen Zusammensetzung und/oder ihrer chemischen und/oder physikalischen Eigenschaften und/oder ihrer Geometrie (z.B. der Schichtdicke) unterschiedlich sein, besonders bevorzugt sind sie aber bezüglich ihrer chemischen Zusammensetzung und/oder ihrer chemischen und/oder physikalischen Eigenschaften identisch. Auch bei mehrschichtigen (Haft-)Klebebändern können eine oder auch beide außenliegenden (Haft-)Klebemassenschichten mit Linern abgedeckt sein.
Die Klebebänder können weitere Schichten aufweisen, wie etwa weitere Trägerschichten, Funktionsschichten oder dergleichen.

Als Trägermaterialien werden sehr bevorzugt biobasierte Materialien ausgewählt, zum Beispiel aus der Liste umfassend entsprechend biobasierte Papiere, Gewebe, Vliese (zum Beispiel aus Baumwolle oder Viskose), Cellophan, Celluloseacetat, biobasierte Polyethylenfolien (PE), biobasierte Polypropylenfolien (PP), Folien aus thermoplastischer Stärke, biobasierte Polyesterfolien (zum Beispiel Folien aus Polylactid (PLA; Polymilchsäure), Polyethylenterephthalat (PET), Polyethylentetrahydrofuranoat (PEF), Polyhydroxyalkanoat (PHA)).

Für die Verankerung der Haftklebemasse auf dem Träger oder auf einem anderen Substrat kann es von Vorteil sein, wenn die Masse und/oder das Substrat vor der Beschichtung mit Corona oder Plasma behandelt wird. Für die atmosphärische Plasmabehandlung eignen sich z. B. Geräte der Fa. Plasmatreat.

Weiterhin kann es für den Prozess und für die Verankerung der (Haft-)Klebemassenschicht mit weiteren möglichen Schichten, wie beispielweise Trägern, zum Beispiel einer Folie auf Basis von Polyethylen, Polypropylen, Polyester, Polyamid, Polymethacrylat, PVC, etc. oder einem viskoelastischen geschäumten oder ungeschäumten Träger auf Basis von Polyacrylat oder Polyurethan von Vorteil sein, wenn eine chemische Verankerung z. B. über einen Primer stattfindet.

Die erfindungsgemäßen Klebemassen, insbesondere in der Ausführungsform als Haftklebemasse, und die entsprechenden Klebebänder und Haftklebebänder lassen sich hervorragend für alle Anwendungsgebiete einsetzen, in denen bisher die entsprechenden Produkte aus petrochemisch hergestellten Ausgangsstoffen verwendet wurden. Insbesondere bei Anwendungen, bei denen es auf die hohe Reinheit der Haftklebemassen, insbesondere also die Abwesenheit von für die jeweilige Anwendung schädlichen Verunreinigungen ankommt, haben die biobasierten Produkte deutliche Vorteile. So lassen sich die erfindungsgemäßen biobasierten Klebemassen, Haftklebemassen, Klebebänder und Haftklebebänder - insbesondere jeweils in der zu 100% biobasierten Ausführungsvariante - besonderes gut für dermatologische, kosmetische und medizinische Anwendungen einsetzen - wie beispielsweise in der Verwendung für Pflaster -, sowie auch für Produkte in hochempfindlichen elektronischen Geräten, wie auch in direktem Kontakt zu hochempfindlichen elektronischen Bauteilen. Insbesondere für den letztgenannten Verwendungszweck (Anwendung im Elektronikbereich), aber auch bei den zuvor genannten Anwendungen, bei denen es auf Hautverträglichkeit ankommt, ist es vorteilhaft, harzfreie Systeme einzusetzen, also solche ohne die Beimengung von Klebharzen und/oder anderen Harzen, da durch Harze gegebenenfalls wieder Verunreinigungen in die (Haft-)Klebemasse eingetragen werden können. Besonders bevorzugt werden hier Reinacrylatsysteme eingesetzt.

## EXPERIMENTELLER TEIL

Die folgenden Untersuchungsmethoden wurden im Rahmen der experimentellen Verifizierung der Erfindung

eingesetzt:

Klebkraft auf Stahloberflächen

Ein 20 mm breiter Streifen einer auf Polyester als Schicht aufgetragenen Acrylathaftklebemasse wurde auf mit Sandpapier 240 geschliffene, zuvor mit Aceton gewaschene Stahlplatten (50 x 200 mm, 2 - 3 mm Dicke, Rautiefe ca. 100 nm gemessen mittels Rautiefemessgerät für Messungen gemäß DIN 4762) aufgebracht. Zur Fixierung wurde der Haftklebestreifen zweimal mit einem Gewicht von 2 kg auf das Substrat aufgedrückt. Der Streifen wurde anschließend sofort mit 300 mm/min und in einem Zugwinkel von 180° vom Substrat abgezogen. Alle Messungen wurden bei Raumtemperatur durchgeführt. Die Messergebnisse sind gemittelt aus drei Messungen und in N/cm angegeben. Die Prüfung erfolgte bei einer Raumtemperatur von 23 $\pm$ 3 °C und einer relativen Luftfeuchtigkeit von 50 $\pm$ 5 %.

Scherfestigkeit von Klebebändern unter Temperaturbelastung (Mikroscherweg)

Messprobenpräparation:

Als zu untersuchende Probe wurde ein Streifen der oben beschriebenen Muster auf eine polierte, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug Höhe x Breite = 13 mm x 10 mm, die Probe wurde senkrecht aufgehängt, überragte am oberen Rand die Stahl-Prüfplatte um 2 mm und wurde bündig mit einem stabilen Klebestreifen verstärkt, der als Auflage für den Wegmessfühler diente.

Messung:

Die zu messende Probe wurde am unteren Ende mit einem Gewicht belastet, und zwar mit einem Gewicht von 100 g im Falle der Beispiele 1a, 3a und V1a und mit einem Gewicht von 500 g im Falle der Beispiele 2a, 4a, 5a, 2.1 bis 2.4 und V2a (siehe unten). Die Stahl-Prüfplatte mit der verklebten Probe wurde auf 40 °C temperiert. Gemessen wurde die Deformation und ggf. die Abrutschstrecke der Probe mittels Wegmessfühler über einen Zeitraum von 15 Minuten. Die Prüfung erfolgte bei einer Raumtemperatur von 23 $\pm$ 3 °C und einer relativen Luftfeuchtigkeit von 50 $\pm$ 5 %.

Glasübergangstemperatur

Die Bestimmung der statischen Glasübergangstemperatur erfolgt über Dynamische Differenzkalorimetrie (DDK; DSC) nach DIN 53765. Angaben zur Glasübergangstemperatur Tg im Rahmen dieser Schrift beziehen sich auf den Glasumwandlungstemperatur-Wert Tg nach DIN 53765:1994-03 (Probentemperatur, bei der die Hälfte der Änderung der spezifischen Wärmekapizität erreicht ist.

K-Wert (nach FIKENTSCHER):

Der K-Wert ist ein Maß für die durchschnittliche Molekülgröße polymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Molekulargewicht, Polydispersität

Die Bestimmung des mittleren Molekulargewichtes $M_W$ und der Polydisperistät D erfolgte mittels Gelpermeationschromatographie. Als Eluent wurde THF mit 0.1 Vol.-% Trifluoressigsäure eingesetzt. Die Messung erfolgte bei 25 °C. Als Vorsäule wurde PSS-SDV, 5 $\mu$, $10^3$ Å ($10^{-7}$ m), ID 8.0 mm x L 50 mm (ID: Innendurchmesser; L: Länge) verwendet. Zur Auftrennung wurden die Säulen PSS-SDV, 5 $\mu$, $10^3$ Å sowie $10^5$ Å und $10^6$ Å ($10^{-7}$ m, $10^{-5}$ m, $10^{-4}$ m) mit jeweils ID 8.0 mm x L 300 mm eingesetzt. Die Probenkonzentration betrug 4 g/l, die Durchflussmenge 1.0 ml pro Minute. Es wurde gegen PMMA-Standards gemessen.

Anteil nachwachsender Rohstoffe in den Polymeren

Der Anteil nachwachsender Rohstoffe ergibt sich aus der Auswahl und Menge der eingesetzten Edukte.
Zur Verifizierung, auch unbekannter Proben, lässt sich die Radiokarbonmethode nach ASTM D6866-04 einsetzen. Die Methode beruht auf der Messung des Isotopes $^{14}C$, das in der Natur (Biomasse) mit einer Häufigkeit von $10^{-10}$ % im

Kohlenstoff vorkommt. Die Messung des Isotops $^{14}C$ erfolgt mittels Flüssigszintillationsspektrometrie oder Massenspektroskopie. Der Bestimmung des Anteils an nachwachsenden Rohstoff liegt zugrunde, dass das Isotop $^{14}C$ eine verhältnismäßig kurze Halbwertszeit des Zerfalls von 5 730 Jahren hat. Daher ist in Kohlenstoffproben, die älter als 60 000 Jahren im Rahmen der Nachweisgrenze der Methoden kein Isotop $^{14}C$ mehr nachweisbar. Der Kohlenstoff in den Erdöl-basierenden Rohstoffen der Petrochemie ist mehrere Millionen Jahre und enthält kein nachweisbares $^{14}C$.

Hautverträglichkeit:

Zur Durchführung der Verträglichkeitstest wurden jeweils 2 Muster (identisches Polymer) bei 15 Testpersonen auf dem Unterarm verklebt. Alle Muster wurden für den vergleichenden Test zeitgleich verklebt. Nach 1 und nach 2 Stunden Tragezeit wurde die Region des Unterarms in unmittelbarer Nähe zu den Prüfmustern bezüglich Rötung in einer Skale von 1 (keine Rötung) bis 5 (sehr starke Rötung) beurteilt. Nach 2 h wurde das Prüfmuster abgezogen und die Rötung nach 1 h nach dem Entfernen des Prüfmusters erneut beurteilt. Als Bewertungszahl wurde der Durchschnitt der Einzelbewertungen (3 Bewertungen von jeweils 2 Prüfmustern von 15 Testpersonen) ermittelt.

Kompatibilität mit elektronischen Bauteilen:

Für die Kompatibilitätstest zu elektronischen Bauelementen wurden vollflächige organische LED's auf Glas verwendet (entsprechend Beispiel 1 in WO 2011060939 A nur mit vollflächiger Beschichtung). Zunächst wurden die Prüfmuster (ohne Abdeckung mit Trennpapier) und die LED-Bauteile eine Woche in der Glovebox bei 23 °C unter $N_2$-Atmosphäre konditioniert. Anschließend wurden die Prüfmuster auf die LED-Bauteile (je Prüfmuster 3 LED-Bauteile) verklebt und mit einer Gummirolle angedrückt. Die Prüflinge wurden nach 100 h einem elektrischen Funktionstest unterworfen. Hierbei wurde die Fläche an sogenannten Dark Spots, Flächen, die aufgrund von chemischer Korrosion ausgelöst durch Verunreinigungen in der Haftklebmasse keine Funktion mehr zeigen, bewertet.

Bestimmung des Gelanteils

Als Gelwert wird der Anteil unlöslicher Polymeranteile bezeichnet. Die Bestimmung erfolgt mittels Soxhlet-Extraktion. Die sorgfältig bei 50 °C getrockneten lösungsmittel- bzw. wasserfreien Klebstoffproben werden exakt ausgewogen und in ein Vliestütchen aus Polyethylen (Tyvek-Vlies) eingeschweißt. Anschließend wird über 24 h eine Soxhlet-Extraktion mit THF als Lösemittel durchgeführt. Aus der Differenz der Probengewichte vor der Extraktion und nach der Extraktion durch Tetrahydrofuran (THF) wird der Gelwert (Gewichtsanteil des Polymers, der nicht in THF löslich ist) bestimmt. Die Angaben beziehen sich auf den Mittelwert aus drei Messungen.

Herstellung der biobasierten Monomere

Herstellung von Bio-Acrylsäure aus Milchsäure (gemäß DE 10 2006 039 203 A)

500 g D/L-Milchsäure (Aldrich natural Lactic Acid) wird mit 10 g Phosphorsäure unter $CO_2$-Atmosphäre auf 180 °C erhitzt. Die Reaktionsgase werden in einer Kühlfalle aufgefangen. Die Reinigung erfolgt durch Vakuumdestillation unter Zugabe von Hydrochinon-Monomethylether. Die Acrylsäure wird in einer Reinheit von > 98 % in einer Ausbeute von 41 % erhalten.
Die derart erhaltene Acrylsäure wird im Folgenden - lediglich zur Unterscheidung zu der im folgenden Verfahren hergestellten Säure - als Bio-Acrylsäure (I) bezeichnet.

Herstellung von Bio-Acrylsäure aus Glycerin (gemäß US 2009/0134357 A):

500 g Glycerin (Pricerine 9086, Croda) und 10 g Phosphorsäure werden auf 200 °C erhitzt. Das entstehende Gas wird mit Hilfe eines Sauerstoffgasstromes über einen Ammonium-Metavanadat-Katalysator (Aldrich) in einem Gasreaktor bei 230 °C geleitet.

Die Reaktionsgase werden in einer Kühlfalle aufgefangen. Die Reinigung erfolgt durch Vakuumdestillation unter Zugabe von Hydrochinon-Monomethylether. Die Acrylsäure wird in einer Reinheit von > 98% in einer Ausbeute von 35% erhalten.
Die derart erhaltene Acrylsäure wird - ebenfalls lediglich zu Unterscheidungszwecken - im Folgenden als Bio-Acrylsäure (II) bezeichnet.

Veresterung:

Die Veresterung der Bio-Acrylsäure (Herstellung auf Basis von Glycerin bzw. Milchsäure) wird mittels azeotroper Veresterung mit Toluol als Lösemittel und p-Toluolsulfonsäure durchgeführt. Die Acrylsäure wird in einem Überschuss von 1,4 eq. in Bezug auf den Alkohol eingesetzt. Um eine Polymerisation zu vermeiden wird der Reaktionsmischung Phenolthiazine (0,001 eq.) zugegeben. Die Reinigung erfolgt mittels Vakuumdestillation unter Zugabe von Hydrochinon-Monomethylether.

Wiederum lediglich zu Unterscheidungszwecken werden solchen Acrylsäureester, die auf Bio-Acrylsäure (I) aus Milchsäure basieren, hier ebenfalls mit der Bezeichnung (I) bezeichnet, die aus Bio-Acrylsäure (II) aus Glycerin basierenden Ester dementsprechend als Acrylsäurester (II).

Als biobasierte Alkohole werden folgende verwendet:

| Biobasierter Alkohol | Hersteller | Resultiertes Acrylatmonomer |
|---|---|---|
| n-Butanol | Cathay Industrial Biotech | n-Butylacrylat |
| iso-Butanol | Butamax | Iso-Butylacrylat |
| 2-Octanol | Casda Biomaterials | 2-Octylacrylat |
| n-Heptanol | Oleris/Arkema | n-Heptylacrylat |

Polymerisation:

Beispiel 1

Dispersionspolymerisation

In einem Reaktor werden 150 g entionisiertes Wasser und 1,9 g 30 %igen wässrigen Saatlatex (mittlere Teilchengröße d50 60 nm) unter $N_2$-Atmosphäre vorgelegt und auf 95 °C erwärmt. Es werden 4 g einer wässrigen Initiatorlösung (7 Gew.-%ige Natriumperoxodisulfat in deionisiertem Wasser) zugegeben. Nach 5 min wird zeitgleich das Monomergemisch, bestehend aus 210 g deionisiertem Wasser, 23,5 g einer 45 %igen wässrigen Lösung aus Disponil AES 60 (Cognis), 463 g (87 Gew.-%) Bio-n-Butylacrylat (I) (100 % aus nachwachsenden Rohstoffen; hergestellt mit Acrylsäure aus Milchsäure), 53 g (10 Gew.-%) Ethylmethacrylat (Aldrich) und 16 g (30 Gew.-%) Bio-Acrylsäure (I) (100 % aus nachwachsenden Rohstoffen, hergestellt aus Milchsäure), und weiterer 36 g der Initiatorlösung bei 95 °C über 3 h zugetropft. Nach Beendigung der Monomer- und Initiatorzugabe wird weitere 30 min bei 95 °C gerührt. Anschließend wird zeitgleich über 15 min 8 g einer 10 %igen wässrigen Wasserstoffperoxidlösung und 4 g einer 10 %igen wässrigen Lösung Brüggolit FF6M (Brüggemann Chemical) zugegeben und weitere 30 min bei 95 °C gerührt. Danach wird nach und nach 19,6 g einer 10 %igen Natronlauge und 7,8 g einer 50 %igen wässrigen Lösung aus Natriumdioctylsulfobernsteinsäure (Rewopol SB DO 75, Goldschmidt) zugegeben und auf Raumtemperatur abgekühlt.

Beispiel 2

Lösemittelpolymerisation

Ein für radikalische Polymerisationen konventioneller Reaktor wurde mit 640 g (80 Gew.-%) Bio-iso-Butylacrylat (I) (100 % aus nachwachsenden Rohstoffen), 152 g (19 Gew.-%) Laurylacrylat (teilweise biobasiert, Sarbio 5101, Sartomer), 8 g (1 Gew.-%) Bio-Acrylsäure (I) (100 % aus nachwachsenden Rohstoffen) und 533 g Aceton/ Benzin (1:1) befüllt. Nach 45minütiger Durchleitung von Stickstoffgas unter Rühren wurde der Reaktor auf 58 °C hochgeheizt und 0,4 g 2,2'-Azobis(2-methylbutyronitril) Vazo 67 hinzugegeben. Anschließend wurde das äußere Heizbad auf 75 °C erwärmt und die Reaktion konstant bei dieser Außentemperatur durchgeführt. Nach 1 h wurden erneut 0,4 g Vazo 67 zugegeben und nach 4 h wurde mit 100 g Aceton/Benzin-Gemisch (1:1) verdünnt.
Nach 5 sowie nach 7 h wurde jeweils mit 1,2 g Bis-(4-tert-butylcyclohexyl)-peroxydicarbonat nachinitiiert. Nach 22 h Reaktionszeit wurde die Polymerisation abgebrochen und auf Raumtemperatur abgekühlt.

Beispiel 3

Es wurde eine Dispersionspolymerisation analog zu Beispiel 1, aber mit folgender Monomerzusammensetzung durchgeführt: 436 g (82 Gew.-%) Bio-iso-Butylacrylat (I) (100% aus nachwachsenden Rohstoffen), 16 g (3 Gew.-%)

Bio-Acrylsäure (I) (100% aus nachwachsenden Rohstoffen) und 80 g (15 Gew.-%) Ac-Monomer aus epoxidierter Fettsäureester (teilweise biobasiert, Mercryl SME, Hobum).

Beispiel 4

Es wurde eine Lösemittelpolymerisation analog zu Beispiel 2, aber mit folgender Monomerzusammensetzung durchgeführt: 552 g (69 Gew.-%) Bio-n-Heptylacrylat (I) (100% aus nachwachsenden Rohstoffen), 8 g (1 Gew.-%) Bio-Acrylsäure (I) (100% aus nachwachsenden Rohstoffen) und 240 g (30 Gew.-%) Bio-i-Butylacrylat (I) (100% aus nachwachsenden Rohstoffen).

Beispiel 5

Es wurde eine Lösemittelpolymerisation analog zu Beispiel 2 durchgeführt, wobei statt Bio-n-Butylacrylat (I) (hergestellt mit Acrylsäure (I) aus Milchsäure) Bio-n-Butylacrylat (II) (hergestellt mit Acrylsäure (II) aus Glycerin) und statt Bio-Acrylsäure (I) (hergestellt aus Milchsäure) Bio-Acrylsäure (II) (hergestellt aus Glycerin) eingesetzt wurde.

Charakterisierung der erhaltenen Polymere:

| | Beispiel 1 | Beispiel 2 | Beispiel 3 | Beispiel 4 | Beispiel 5 |
|---|---|---|---|---|---|
| Zusammensetzung (Gew.-%) | 87% BA (I), 10% EMA, 3% AS (I) | 80% iBA (I), 19% LA, 1% AS (I) | 72% iBA (I), 15% EFA, 10% EMA, 3% AS (I) | 69% HpA (I), 30% iBA, 1% AS (I) | 80% iBA (II), 19% LA, 1% AS (II) |
| | Dispersionspolymerisation | Lösemittelpolymerisation | Dispersionspolymerisation | Lösemittelpolymerisation | Lösemittelpolymerisation |
| Mw [g/mol] | -- | 1.560.000 | -- | 1.050.000 | 1.390.000 |
| D (Mw/Mn) | -- | 19 | -- | 17 | 17 |
| K-Wert | -- | 92 | -- | 74 | 91 |
| Tg [°C] | -37 | -27 | -21 | - 38 | -27 |
| Gelwert [%] | 31 | -- | 28 | -- | -- |
| EA: Ethylacrylat, BA: n-Butylacrylat, iBA: isoButylacrylat, AS: Acrylsäure,<br>LA: Laurylacrylat, HpA: n-Heptylacrylat, EFA: Acrylat auf Basis epoxidierter Fettsäureester | | | | | |

Die im Lösemittel vorliegenden Polymere aus den in den Beispielen 2, 4 und 5 dargestellten Polymerisationen wurden jeweils mit 0,2 Gew.-% Aluminiumacetylacetonat (als 3 %ige Lösung in Aceton; Al-Chelat), jeweils bezogen auf das Einwaagegewicht (Feststoffgehalt) des Polymers, gemischt (wodurch während des späteren Trocknens eine Vernetzungsreaktion stattfindet). Diese Mischungen sowie die Polymerdispersionen aus den Beispielen 1 und 3 wurden jeweils mit einem Auftrag von 50 g/m$^2$ auf eine 30 $\mu$m dicke biobasierte Polylactid-Folie (Nativia NTSS von Taghleef Industries) ausgestrichen und bei 100 °C bis auf einen Restlösemittelgehalt von höchstens 0,3 Gew.-% getrocknet. Nach dem Trocknen werden die Haftklebemassenschichten mit einem silikonisiertem Trennpapier abgedeckt.
Die dabei erhaltenen Proben werden als Beispiele 1a bis 5a bezeichnet.

| | **Beispiel 1a** | **Beispiel 2a** | **Beispiel 3a** | **Beispiel 4a** | **Beispiel 5a** |
|---|---|---|---|---|---|
| Polymer aus | Beispiel 1 | Beispiel 2 | Beispiel 3 | Beispiel 4 | Beispiel 5 |
| Vernetzer | -- | + 0,2 Gew.% Al-Chelat | -- | + 0,2 Gew.% Al-Chelat | + 0,2 Gew.% Al-Chelat |
| KK Stahl (300 mm/min, 180°) [N/cm] | 3,6 | 4,1 | 3,9 | 3,7 | 4,3 |
| MSW 40°C, 15 min [$\mu$m] | 238 (100g Gewicht) | 108 (500g Gewicht) | 205 (100g Gewicht) | 135 (500g Gewicht) | 116 (500g Gewicht) |
| Bioanteil der Klebmasse ($^{14}$C) [%] | 91 | 95 | 91 | 100 | 96 |
| Hautverträglichkeit | 1,6 | 1,6 | 1,4 | 1,7 | 1,8 |
| Kompatibilität mit elektronischen Bauteilen, Fläche von Dark Spots[%] | -- | 12 | -- | 9 | 15 |

In einer weiteren Versuchsreihe wurde das in Beispiel 2 erhaltene Polymer mit biobasierten Klebharzen (Foralyn 90 von Hercules oder Dernatac P100 von DRT, siehe nachfolgende Tabelle) vermischt und dann jeweils mit 0,3 Gew.-% Aluminiumacetylacetonat (als 3 %ige Lösung in Aceton, Al-Chelat) bezogen auf das Einwaagegewicht (fest) des Polymers gemischt (wodurch während des späteren Trocknens eine Vernetzungsreaktion stattfindet). Diese Mischungen werden mit einem Auftrag von 50 g/m$^2$ auf eine 30 $\mu$m dicke BoPLA-Folie (Nativia NTSS von Taghleef Industries) ausgestrichen und bei 100 °C bis auf einen Restlösemittelgehalt von höchstens 0,3 Gew.-%). Nach dem Trocknen werden die Haftklebemassenschichten mit einem silikonisiertem Trennpapier abgedeckt.
Die so erhaltenen Proben werden als Beispiel 2.1 bis 2.4 bezeichnet.

| | **Beispiel 2.1** | **Beispiel 2.2** | **Beispiel 2.3** | **Beispiel 2.4** |
|---|---|---|---|---|
| Polymer aus | Beispiel 2 | Beispiel 2 | Beispiel 2 | Beispiel 2 |
| Vernetzer | + 0,3 Gew.% Al-Chelat | + 0,3 Gew.% Al-Chelat | + 0,3 Gew.% Al-Chelat | + 0,3 Gew.% Al-Chelat |
| Klebharz | 15 Gew.-% Foralyn90 | 30 Gew.-% Foralyn90 | 15 Gew.-% DernatacP100 | 30 Gew.-% DernatacP100 |
| KK Stahl (300 mm/min, 180°) [N/cm] | 6,2 | 7,3 | 6,5 | 8,2 |
| MSW 40°C, 500g, 15 min [$\mu$m] | 161 | 278 | 143 | 176 |
| Bioanteil der Klebmasse ($^{14}$C) [%] | 99 | 98 | 100 | 98 |

Vergleichsbeispiel V1:

Es wurde eine Lösemittelpolymerisation analog zu Beispiel 2, aber mit folgender Monomerzusammensetzung durchgeführt: 396 g (49,5 Gew.-%) n-Butylacrylat (petrochemisch hergestellt), 396 g (49,5 Gew.-%) 2-Ethylhexylacrylat (petrochemisch hergestellt), 8 g (1 Gew.-%) Bio-Acrylsäure

Vergleichsbeispiel V2:

Es wird die kommerzielle Dispersions-Haftklebemasse Primal PS 83 D (Dow Chemicals) verwendet.

Das im Lösemittel vorliegende Polymer aus der im Vergleichsbeispiel V1 dargestellten Polymerisation wird mit 0,2 Gew.-% Aluminiumacetylacetonat (als 3%ige Lösung in Aceton), bezogen auf das Einwaagegewicht (Feststoffgehalt) des Polymers gemischt. Diese Mischung sowie die Polymerdispersion aus dem Vergleichsbeispiel V2 werden mit einem Auftrag von 50 g/m$^2$ auf eine 30 $\mu$m dicke biobasierte Polylactid-Folie (Nativia NTSS von Taghleef Industries) ausgestrichen und bei 100°C bis auf einen Restlösemittelgehalt von höchstens 0,3 % getrocknet. Nach dem Trocknen werden die haftklebemassenschichten mit einem silikonisiertem Trennpapier abgedeckt. Die so erhältlichen Proben werden als Vergleichsbeispiele V1a und V2a bezeichnet.

| | **Vergleichsbeispiel V1a** | **Vergleichsbeispiel V2a** |
|---|---|---|
| Mw [g/mol] | 929.000 | -- |
| D (Mw/Mn) | 17 | -- |
| K-Wert | 81 | -- |
| Tg [°C] | - 55 | - 48 |
| Vernetzer | + 0,2 Gew.% Al-Chelat | -- |
| KK Stahl (300 mm/min, 180°) [N/cm] | 2,3 | 3,9 |
| MSW 40°C, 15 min [$\mu$m] | 140 (500g Gewicht) | 230 (100g Gewicht) |
| Bioanteil der Klebmasse ($^{14}$C) [%] | 0 | 0 |
| Hautverträglichkeit | 2,9 | 2,7 |
| Kompatibilität mit elektronischen Bauteilen [%] | 32 | -- |

Der Vergleich zeigt unmittelbar, dass die biobasierten Polyacrylatpolymere sowohl besser hautverträglich sind als auch den hohen Ansprüchen für elektronische Anwendungen besser genügen.

## Patentansprüche

1. Haftklebemasse umfassend eine Polymerkomponente auf Acrylatbasis, **dadurch gekennzeichnet, dass** mindestens 50 Gew.-% der zur Herstellung der Polymerkomponente eingesetzten Monomere jeweils vollständig biobasiert sind, also vollständig auf nachwachsende Rohstoffe zurückzuführen sind.

2. Haftklebemasse nach Anspruch 1., **dadurch gekennzeichnet, dass** mindestens 70 Gew.-%, bevorzugt mindestens 90 Gew.-%, sehr bevorzugt mehr als 98 Gew.-%, äußerst bevorzugt alle der zur Herstellung der Polymerkomponente eingesetzten Monomere vollständig auf nachwachsenden Rohstoffen basieren.

3. Haftklebemasse nach einem der vorangehenden Ansprüche, **dadurch gekennzeichnet, dass** die Polymerkomponente auf Acrylatbasis aus einem oder aus mehreren Polymeren zusammengesetzt ist, wobei zumindest eine der Polymere, insbesondere mehrere, bevorzugt alle Polymere zu mehr als 40 Gew.-%, bevorzugt zu mehr als 50 Gew.-% auf Acrylsäure, Methacrylsäure, Acrylsäureester und/oder Methacrylsäureester zurückzuführen ist.

4. Haftklebemasse nach einem der vorangehenden Ansprüche, **dadurch gekennzeichnet, dass** als biobasiertes Monomer ausschließlich oder teilweise iso-Butylacrylat eingesetzt wird, dessen Alkoholkomponente und dessen Acrylsäurekomponente auf nachwachsende Rohstoffe basieren.

5. Haftklebemassen nach einem der vorangehenden Ansprüche, **dadurch gekennzeichnet, dass** klebrigmachende Harze zugesetzt sind, die zum überwiegenden Teil, insbesondere ausschließlich, auf nachwachsenden Rohstoffen basieren.

6. Haftklebemasse nach einem der vorangehenden Ansprüche, **dadurch gekennzeichnet, dass** die Haftklebemasse ausschließlich aus Komponenten zusammengesetzt ist, die auf nachwachsenden Rohstoffen

basieren.

7. **7.** Haftklebemasse nach einem der vorangehenden Ansprüche, **dadurch gekennzeichnet, dass** der Haftklebemasse keine Additive zugesetzt sind, die nicht auf nachwachsenden Rohstoffen basieren.

## Claims

1. **1.** Pressure-sensitive adhesive comprising an acrylate-based polymer component, **characterized in that** at least 50 wt% of the monomers used for preparing the polymer component are in each case fully biobased, in other words fully attributable to renewable raw materials.

2. **2.** Pressure-sensitive adhesive according to Claim 1, **characterized in that** at least 70 wt%, preferably at least 90 wt%, very preferably more than 98 wt%, most preferably all of the monomers used for preparing the polymer component are based fully on renewable raw materials.

3. **3.** Pressure-sensitive adhesive according to any of the preceding claims, **characterized in that** the acrylate-based polymer component is composed of one or of a plurality of polymers and at least one of the polymers, more particularly a plurality of and preferably all the polymers, is/are attributable to an extent of more than 40 wt%, preferably more than 50 wt%, to acrylic acid, methacrylic acid, acrylic esters and/or methacrylic esters.

4. **4.** Pressure-sensitive adhesive according to any of the preceding claims, **characterized in that** the biobased monomer used comprises, exclusively or partly, isobutyl acrylate whose alcohol component and whose acrylic acid component are based on renewable raw materials.

5. **5.** Pressure-sensitive adhesives according to any of the preceding claims, **characterized in that** tackifying resins have been added which are based predominantly, more particularly exclusively, on renewable raw materials.

6. **6.** Pressure-sensitive adhesive according to any of the preceding claims, **characterized in that** the pressure-sensitive adhesive is composed exclusively of components based on renewable raw materials.

7. **7.** Pressure-sensitive adhesive according to any of the preceding claims, **characterized in that** no additives not based on renewable raw materials have been added to the adhesive.

## Revendications

1. **1.** Matériau adhésif sensible à la pression comprenant un composant polymère à base d'acrylate, **caractérisé en ce qu'**au moins 50 % en poids des monomères utilisés pour la fabrication du composant polymère sont chacun entièrement biologiques, c'est-à-dire proviennent entièrement de matières premières renouvelables.

2. **2.** Matériau adhésif sensible à la pression selon la revendication 1, **caractérisé en ce qu'**au moins 70 % en poids, de préférence au moins 90 % en poids, très préférentiellement plus de 98 % en poids, de manière préférée entre toutes tous les monomères utilisés pour la fabrication du composant polymère sont entièrement à base de matières premières renouvelables.

3. **3.** Matériau adhésif sensible à la pression selon l'une quelconque des revendications précédentes, **caractérisé en ce que** le composant polymère à base d'acrylate est composé par un ou plusieurs polymères, au moins un des polymères, notamment plusieurs, de préférence tous les polymères provenant à hauteur de plus de 40 % en poids, de préférence de plus de 50 % en poids, d'acide acrylique, d'acide méthacrylique, d'ester de l'acide acrylique et/ou d'ester de l'acide méthacrylique.

4. **4.** Matériau adhésif sensible à la pression selon l'une quelconque des revendications précédentes, **caractérisé en ce que** de l'acrylate d'iso-butyle, dont le composant alcool et dont le composant acide acrylique sont à base de matières premières renouvelables, est utilisé exclusivement ou partiellement en tant que monomère biologique.

5. **5.** Matériaux adhésifs sensibles à la pression selon l'une quelconque des revendications précédentes, **caractérisé en ce que** des résines collantes sont ajoutées, qui sont pour la majeure partie, notamment exclusivement, à base

de matières premières renouvelables.

6. Matériau adhésif sensible à la pression selon l'une quelconque des revendications précédentes, **caractérisé en ce que** le matériau adhésif sensible à la pression est exclusivement composé de composants qui sont à base de matières premières renouvelables.

7. Matériau adhésif sensible à la pression selon l'une quelconque des revendications précédentes, **caractérisé en ce qu'**aucun additif qui n'est pas à base de matières premières renouvelables n'est ajouté au matériau adhésif sensible à la pression.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2062955 A
- EP 2076577 A
- WO 2009129087 A
- WO 2008023040 A
- WO 2006092272 A
- DE 102006039203 A
- US 20070129570 A
- DE 102006039203 A1
- ES 8400383 A
- EP 1230275 A
- EP 1323740 A
- WO 2011060939 A


### In der Beschreibung aufgeführte Nicht-Patentliteratur


- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- *Polymer,* 1967, vol. 8, 381 ff